# EUROPÄISCHE PATENTSCHRIFT

(11) **EP 1 637 790 B1**
(45) Veröffentlichungstag und Bekanntmachung des Hinweises auf die Patenterteilung: **25.05.2011**
(21) Anmeldenummer: 05015615.7
(22) Anmeldetag: 19.07.2005
(51) Int. Cl.: F16L 37/092, F16L 37/091, F16L 41/08

(54) **Anschlussvorrichtung für Fluidleitungen**
Connecting device for fluid conduits
Dispositif de connexion pour des conduits de fluide

(30) Priorität: 20.09.2004 DE 102004046548
(43) Veröffentlichungstag der Anmeldung: 22.03.2006
(73) Patentinhaber: FESTO AG & Co. KG, 73734 Esslingen (DE)
(72) Erfinder: Bogdanowicz, Grzegorz, 73760 Ostfildern (DE); Brenner, Jakob, 73730 Esslingen (DE)
(74) Vertreter: Abel, Martin

(56) Entgegenhaltungen:
- EP-A- 0 600 201
- EP-A- 0 711 946
- DE-A1- 10 162 658
- DE-U1- 20 119 713
- GB-A- 2 080 467
- GB-A- 2 085 992
- US-A- 5 069 424
- US-A- 5 098 241
- US-A- 5 458 379
- US-A1- 2002 140 226

## Beschreibung

Die Erfindung betrifft eine Anschlussvorrichtung, geeignet für einen Anschluss von unterschiedlichen Fluidleitungen mit unterschiedlichem Außendurchmesser an ein Gehäuse, mit einem Gehäuse, in dem mindestens eine in Längsrichtung abgestufte, am inneren Ende in einen Fluidkanal übergehende Gehäuseausnehmung ausgebildet ist, wobei in der Gehäuseausnehmung eine eine das Hindurchstecken einer anzuschließenden Fluidleitung ermöglichende Durchtrittsöffnung definierende Befestigungseinrichtung fixiert ist, der ein eine auf die Außenkontur der anzuschließenden Fluidleitung abgestimmte Innenkontur aufweisender, von der angeschlossenen Fluidleitung durchsetzter und mit der Wandung der Gehäuseausnehmung in Dichtkontakt stehender Dichtungsring axial innen vorgelagert ist, und wobei sich axial innen an den den Dichtungsring enthaltenden Ausnehmungsabschnitt ein diesbezüglich einen verringerten Querschnitt aufweisender Zentrierabschnitt der Gehäuseausnehmung anschließt, in den die angeschlossene Fluidleitung mit ihrem Leitungsendabschnitt unter gleichzeitiger Querabstützung hineinragt.

Eine aus der DE 101 62 658 A1 bekannte Anschlussvorrichtung dieser Art verfügt über ein Gehäuse mit einer abgestuften Gehäuseausnehmung, in der eine hohlzylindrische Befestigungseinrichtung mit einem axial innen vorgelagerten Dichtungsring installiert ist. Eine anzuschließende Fluidleitung wird durch die Befestigungseinrichtung und den sich anschließenden Dichtungsring eingesteckt, bis sie mit ihrem Leitungsendabschnitt aus dem Dichtungsring herausragt und in einen hinsichtlich seines Innendurchmessers auf den Außendurchmesser des Leitungsendabschnittes abgestimmten Zentrierabschnitt der Gehäuseausnehmung eintaucht. Durch die aufeinander abgestimmten Durchmesser erfährt der Leitungsendabschnitt innerhalb des Zentrierabschnittes eine Querabstützung durch das Gehäuse, was seine Lage in Bezug auf den vorgeordneten Dichtungsring stabilisiert und auch dann konstant hält, wenn außerhalb der Anschlussvorrichtung Querkräfte auf die Fluidleitung einwirken.

Eine ähnliche Anordnung, bei der allerdings das Gehäuse der Anschlussvorrichtung anders als im Falle der DE 101 62 658 A1 nicht unmittelbar von einem fluidtechnischen Gerät gebildet ist, sondern eine eigenständige Komponente darstellt, wird in der DE 39 05 722 C2 beschrieben.

Bei beiden Ausführungsbeispielen ist es notwendig, zur Fixierung von Fluidleitungen unterschiedlicher Durchmesser auf speziell angepasste Gehäuse zurückzugreifen. Folglich müssen unterschiedliche Gehäusetypen zur Verfügung gestellt werden, wenn man sich die Option erhalten will, wahlweise Fluidleitungen unterschiedlicher Durchmesser anschließen zu können. Besonders problematisch ist dies bei Bauformen, deren Gehäuse integraler Bestandteil eines fluidtechnischen Gerätes, beispielsweise eines Ventils ist, das nicht selten über eine relativ komplexe Gestaltung verfügt und einen entsprechend hohen Fertigungsaufwand bedingt.

Die DE 201 19 713 U1 beschreibt einen Steckverbinder für Metallrohre, der ein Gehäuse mit einer abgestuften Gehäuseausnehmung aufweist. In der Gehäuseausnehmung befindet sich eine Fixiereinrichtung für ein Metallrohr und ein dieser axial innen vorgelagerter Dichtungsring. Dem Dichtungsring seinerseits mit Abstand axial innen vorgelagert, befindet sich in der Gehäuseausnehmung ein Führungselement aus einem nichtmetallischem Werkstoff, das einer Spaltkorrosion entgegenwirken soll. Das Führungselement bildet auch einen Anschlag zur Begrenzung der Einsteckbewegung des Metallrohres.

Aus der GB-A-2 085 992 geht ein Leitungsverbinder hervor, der in axialer Aufeinanderfolge eine Befestigungseinrichtung, einen Dichtungsring und ein Anschlagteil aufweist. Das Anschlagteil hat einen zylindrischen Abschnitt, in den die eingesteckte Leitung eintaucht und die die Leitung zentriert. Das Führungsteil dient außerdem als axialer Anschlag für die Leitung und für den separaten Dichtungsring.

Die US-A-5 458 379 beschreibt eine Kupplungseinrichtung, bei der eine Fluidleitung in eine abgestufte Hülse eingesteckt wird, die in ein Gehäuse eingesetzt ist und eine Ringnut aufweist, in die ein zur Abdichtung der Fluidleitung dienender Dichtungsring eingesetzt ist.

Es ist die Aufgabe der vorliegenden Erfindung, Maßnahmen vorzuschlagen, die auf kostengünstigere Weise einen Anschluss von Fluidleitungen unterschiedlicher Durchmesser gestatten.

Zur Lösung dieser Aufgabe ist vorgesehen, dass die Anschlussvorrichtung einen unter Bildung einer Baueinheit einstückig mit dem Dichtungsring ausgebildeten Adapterring aufweist, der zur Überbrückung eines in Abhängigkeit vom Außendurchmesser der anzuschließenden Fluidleitung vorhandenen radialen Zwischenraumes zwischen dem Außenumfang des Leitungsendabschnittes und dem Innenumfang des Zentrierabschnittes in den Zentrierabschnitt einsetzbar ist und im in den Zentrierabschnitt eingesetzten Zustand eine allseitige radiale Abstützung des in ihn hineinragenden Leitungsendabschnittes bezüglich des Innenumfanges des Zentrierabschnittes bewirkt.

Somit kann auf verhältnismäßig einfache Weise eine variable Anschlussmöglichkeit für Fluidleitungen unterschiedlicher Außendurchmesser zur Verfügung gestellt werden. Zweckmäßigerweise wird man bei der Herstellung der Gehäuseausnehmung die Abmessungen des Zentrierabschnittes so wählen, dass sein Innendurchmesser mit dem Außendurchmesser derjenigen Fluidleitung übereinstimmt, die innerhalb einer Gruppe unterschiedlicher Fluidleitungen über den größten Außendurchmesser verfügt. Um diese Fluidleitung anzuschließen, kann auf das Einsetzen eines Adapterringes verzichtet werden, da hier der Innenumfang des Zentrierabschnittes unmittelbar selbst die Querabstützung des Leitungsendabschnittes übernimmt. Soll hingegen eine Fluidleitung kleineren Außendurchmessers angeschlossen werden, kann dies mit der gleichen Gehäuseausnehmung geschehen, wobei zur Gewährleistung der Querabstützung des Leitungsendabschnittes zuvor lediglich ein Adapterring entsprechender Wandstärke in den Zentrierabschnitt einzusetzen ist. In diesem Falle erfolgt die gehäuseseitige Querabstützung des Leitungsendabschnittes nicht unmittelbar durch den Zentrierabschnitt selbst, sondern über den zwischengeschalteten Adapterring. Zur sicheren Fixierung und Abdichtung der anzuschließenden Fluidleitungen wird es zwar in der Regel erforderlich sein, auf die unterschiedlichen Leitungsdurchmesser abgestimmte Befestigungseinrichtungen und Dichtungsringe bereitzuhalten, die dann selektiv zum Einsatz kommen. Die Bereitstellung dieser Komponenten ist jedoch weitaus günstiger, als der zusätzliche Rückgriff auf unterschiedliche Gehäusetypen. Zumal die Außenabmessungen jeweils gleich bleiben können und sich die notwendigen Anpassungsmaßnahmen auf die Gestaltung der Innendurchmesser beschränken.

Vor allem hinsichtlich Herstellung und Lagerhaltung ergeben sich Vorteile, weil die beiden Ringe einstückig zu einer im Folgenden als Dichtungs- und Adapterbaueinheit bezeichneten Baueinheit zusammengefasst sind. Letzteres hat auch den Vorteil, dass man bei der Herstellung der Baueinheit eine gleichzeitige Anpassung der Innendurchmesser des Dichtungsringes und des Adapterringes an den Außendurchmesser der anzuschließenden Fluidleitung vornehmen kann.

Vorteilhafte Weiterbildungen der Erfindung gehen aus den Unteransprüchen hervor.

Es wäre möglich, Dichtungsring und Befestigungseinrichtung so auszubilden, dass sie eine zusammenhängende Baugruppe bilden. Vor allem aus Gründen der Variabilität bei der Herstellung und Bereitstellung der einzelnen Komponenten erscheint es jedoch vorteilhaft, wenn der Dichtungsring nicht direkt an der Befestigungseinrichtung fixiert ist.

Bei einer zweckmäßigen Ausgestaltung verfügt der Adapterring bei nicht eingestecktem Leitungsendabschnitt über eine sich zu seinem dem Dichtungsring eingesetzten freien Ende hin konisch verjüngende Gestalt. Dadurch wird das Einstecken des Adapterringes in die Zentrierausnehmung vereinfacht. Der nach der Steckmontage zwischen dem Außenumfang des Adapterringes und dem Innenumfang des Zentrierabschnittes vorhandene, keilförmig konturierte Ringspalt verschwindet beim nachfolgenden Einstecken der Fluidleitung, weil diese den zweckmäßigerweise gummielastischen Adapterring bis zur Anlage am Innenumfang des Zentrierabschnittes aufweitet.

Das Gehäuse der Anschlussvorrichtung kann integraler Bestandteil eines fluidtechnischen Gerätes sein und dabei insbesondere in Baueinheit mit dem Gerätegehäuse ausgebildet sein. Insbesondere bei einer solchen Ausgestaltung können mehrere Gehäuseausnehmungen in ein und demselben Gehäuse vorgesehen sein, die untereinander identisch gestaltet sind und die unabhängig voneinander, in Verbindung mit Fluidleitungen entsprechender Durchmesser, ohne oder mit eingesetztem Adapterring zur Realisierung der Anschlussvorrichtung verwendbar sind.

Die Befestigungseinrichtung verfügt zweckmäßigerweise über eine in der Gehäuseausnehmung fixierte Trägerhülse, der koaxial ein Haltering zugeordnet ist, durch den die angeschlossene Fluidleitung hindurchgreift, sodass er die Fluidleitung am Außenumfang haltend beaufschlagt. Um eine leicht lösbare Verbindung der Fluidleitung zu realisieren, kann die Trägerhülse mit einer diesbezüglich axial verschiebbaren Lösehülse ausgestattet sein, die von axial außen her betätigbar ist, um sie gegen den Haltering zu drücken und dadurch dessen Haltegriff bezüglich der eingesteckten Fluidleitung zu lösen.

Als besonders vorteilhaft erweist sich eine Bauform der Anschlussvorrichtung, bei der die Befestigungseinrichtung lösbar in der Gehäuseausnehmung fixiert ist. Diese lösbare Fixierung kann, sofern vorhanden, über eine lösbar gehaltene Trägerhülse der zuvor beschriebenen Art realisiert werden. Die Trägerhülse kann beispielsweise durch eine Schraubverbindung oder durch axiales Einstecken und anschließendes Fixieren mittels einer Halteklammer in der Gehäuseausnehmung festgelegt werden. Durch die Lösbarkeit der Verbindung besteht eine einfache Austauschmöglichkeit, wenn eine Umrüstung zum Zwecke des Anschließens einer einen anderen Außendurchmesser aufweisenden Fluidleitung gewünscht ist.

Nachfolgend wird die Erfindung anhand der beiliegenden Zeichnung näher erläutert. In dieser zeigen:
- Figur 1: eine mögliche erste Ausführungsform der erfindungsgemäßen Anschlussvorrichtung im Längsschnitt, und
- Figur 2: eine mögliche weitere Ausführungsform der erfindungsgemäßen Anschlussvorrichtung, ebenfalls im Längsschnitt.

Die in der Zeichnung insgesamt mit Bezugsziffer 1 versehenen Anschlussvorrichtungen enthalten jeweils ein Gehäuse 2, in dem zwei eine lineare Erstreckung aufweisende, in axialer Richtung abgestufte Gehäuseausnehmungen 3 ausgebildet sind. Alternativ könnte das Gehäuse 2 auch mehr als drei Gehäuseausnehmungen oder auch nur eine Gehäuseausnehmung aufweisen.

Mit ihrem äußeren Ende sind die Gehäuseausnehmungen 3 zu einer Außenfläche 4 des Gehäuses 2 hin offen. Mit ihrem entgegengesetzten inneren Ende gehen sie jeweils in einen sich bevorzugt axial fortsetzenden Fluidkanal 5 über, der in dem Gehäuse 2 verläuft. Die Anschlussvorrichtung 1 ermöglicht es, an jeden dieser Fluidkanäle 5 eine Fluidleitung 6 anzuschließen, bei der es sich um ein starres Rohrstück, oder vorzugsweise, um einen flexiblen Schlauch handeln kann.

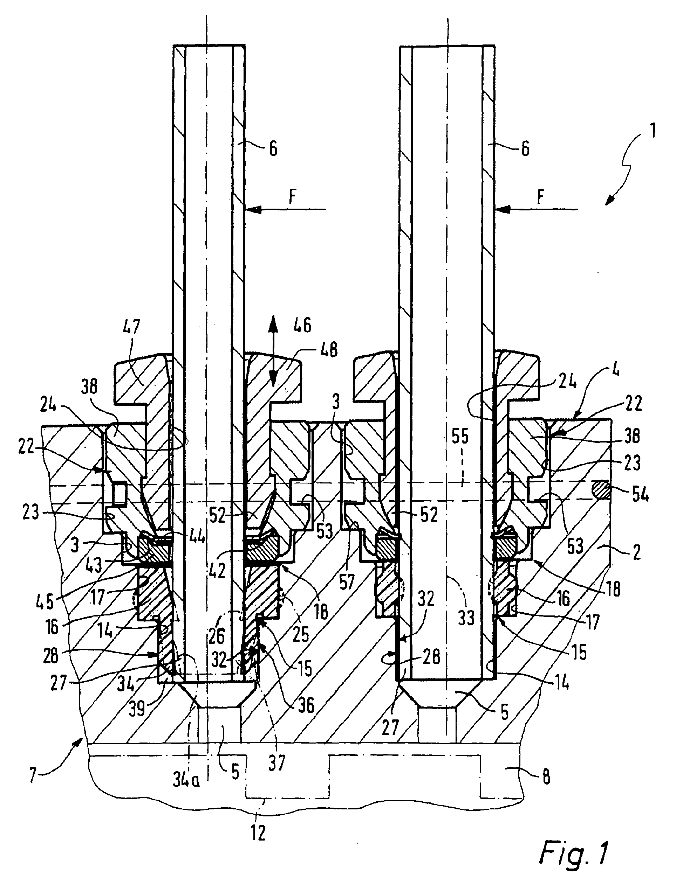

Beim Ausführungsbeispiel der Figur 1 ist das Gehäuse 2 ein integraler Bestandteil eines fluidtechnischen Gerätes 7, das hier exemplarisch als zur Steuerung von Fluidströmen dienendes Ventil ausgebildet ist. Bevorzugt bildet das Gehäuse 2 des fluidtechnischen Gerätes 7 unmittelbar auch das Gehäuse 2 der Anschlussvorrichtung 1. Auf diese Weise sind sehr kompakte Abmessungen realisierbar.

Das fluidtechnische Gerät 7 der Figur 1 verfügt über eine ansatzweise abgebildete Aufnahmekammer 8, in der ein strichpunktiert angedeutetes verstellbares Ventilglied 12 angeordnet ist. Die von den Gehäuseausnehmungen 3 ausgehenden Fluidkanäle 5 müden seitlich in die Aufnahmekammer 8 ein und können je nach Stellung des Ventilgliedes 12 untereinander sowie mit nicht näher dargestellten weiteren Ventilkanälen in verschiedener Weise fluidisch miteinander verknüpft werden.

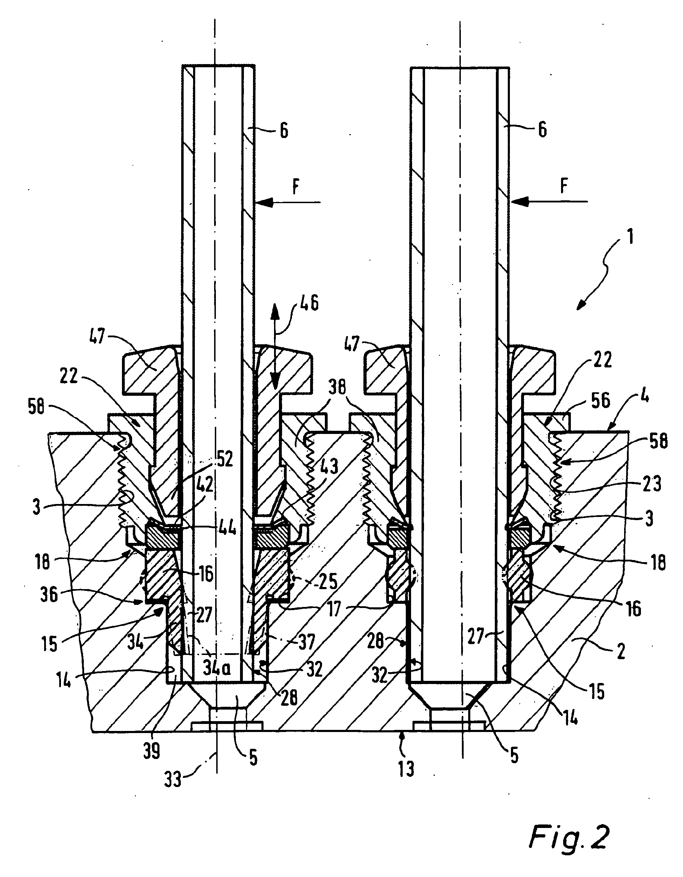

Bei dem Ausführungsbeispiel der Figur 2 ist das Gehäuse 2 ein eigenständiges Bauteil, welches über eine Schnittstelle 13 verfügt, über die es an einer nicht näher dargestellten weiteren Komponente montierbar ist, an die die Fluidleitungen 6 angeschlossen werden sollen. Bei dieser weiteren Komponente kann es sich um ein fluidtechnisches Gerät handeln, beispielsweise um ein Ventil oder um einen durch Fluidkraft betätigbaren Antrieb.

Durch die schon erwähnte axiale Abstufung des Innendurchmessers der Gehäuseausnehmungen 3 sind diese in mehrere Ausnehmungsabschnitte unterteilt, deren Durchmesser in der Längsrichtung der Gehäuseausnehmung 3 von außen nach innen abnehmen.

Der am weitesten axial innen liegende Ausnehmungsabschnitt definiert den Bereich geringsten Innendurchmessers der Gehäuseausnehmungen 3. Er ist zylindrisch gestaltet und sei als Zentrierabschnitt 14 bezeichnet.

An den Zentrierabschnitt 14 schließt sich nach axial außen hin über eine erste Abstufung 15 ein ebenfalls zylindrisch konturierter weiterer Ausnehmungsabschnitt an, in dem ein Dichtungsring 16 platziert ist und der daher als Dichtungsaufnahmeabschnitt 17 bezeichnet sei. Sein Durchmesser ist größer als derjenige des Zentrierabschnittes 14.

An den Dichtungsaufnahmeabschnitt 17 schließt sich über eine weitere Abstufung 18 ein im Durchmesser neuerlich größerer Ausnehmungsabschnitt an, in dem eine in ihrer Gesamtheit mit Bezugsziffer 22 bezeichnete Befestigungseinrichtung für die anzuschließende Fluidleitung 6 gehalten ist und der daher als Befestigungsabschnitt 23 bezeichnet sei.

Die Befestigungseinrichtung 22 verfügt über eine koaxiale, durchgehende Durchtrittsöffnung 24, deren Durchmesser im Wesentlichen demjenigen der anzuschließenden Fluidleitung 6 entspricht. Der Dichtungsring 16 ist der Befestigungseinrichtung 22 axial innen unmittelbar koaxial vorgelagert und sitzt mit einer gewissen Vorspannung im Dichtungsaufnahmeabschnitt 17, sodass er dort mit der Wandung der Gehäuseausnehmung 3 in Dichtkontakt steht.

Zweckmäßigerweise hat der Dichtungsring 16 am Außenumfang einen umlaufenden Abdichtwulst 25, der verformt wird, wenn der Dichtungsring 16 in den Dichtungsaufnahmeabschnitt 17 eingesteckt wird, weshalb er in der Zeichnung nur strichpunktiert angedeutet ist.

Der Dichtungsring 16 hat eine auf die Außenkontur der anzuschließenden Fluidleitung 6 abgestimmte Innenkontur. Dabei besitzt der Dichtungsring 16 zweckmäßigerweise einen bei nicht angeschlossener Fluidleitung 6 nach radial innen vorspringenden umlaufenden Dichtungsvorsprung 26, der von der Fluidleitung 6 bei deren Einstecken nach radial außen verdrängt wird, sodass er mit radialer Vorspannung am Außenumfang der Fluidleitung 6 anliegt. In der Zeichnung ist der ringförmige Dichtungsvorsprung 26 daher nur strichpunktiert angedeutet.

Eine angeschlossene Fluidleitung 6 greift durch die Befestigungseinrichtung 22 und den sich daran anschließenden Dichtungsring 16 hindurch und ragt mit ihrem frei endenden Leitungsendabschnitt 27 in den Zentrierabschnitt 14 hinein. Dort erfährt der Leitungsendabschnitt 27 vom Gehäuse 2 unmittelbar oder mittelbar eine Querabstützung, sodass er nicht seitwärts ausweichen kann. Dies verhindert selbst dann, wenn auf den außerhalb der Befestigungseinrichtung 22 liegenden Fluidleitungsabschnitt eine Querkraft F ausgeübt werden sollte, ein unkontrolliertes Querverlagern bezüglich dem Dichtungsring 16, sodass letzterer stets zuverlässig dichtend am Außenumfang der Fluidleitung 6 und am Innenumfang des Dichtungsaufnahmeabschnittes 17 anliegt.

Bei beiden Ausführungsbeispielen ist an die rechts liegende Gehäuseausnehmung 3 eine Fluidleitung 6 angeschlossen, deren Außendurchmesser zumindest im Wesentlichen dem Innendurchmesser des Zentrierabschnittes 14 entspricht. Ein minimaler Spalt ist möglich, um bei der Installation der Fluidleitung 6 deren Einführen in den Zentrierabschnitt 14 zu erleichtern.

Bei dieser Konstellation wird der Leitungsendabschnitt 27 an seinem Außenumfang 28 unmittelbar vom Innenumfang 32 des Zentrierabschnittes 14 ringsum rechtwinkelig zur Fluidleitungslängsachse 33 abgestützt und an Querbewegungen relativ zum Gehäuse 2 gehindert.

Die erfindungsgemäßen Maßnahmen ermöglichen es, an eine identisch ausgebildete Gehäuseausnehmung 3 eine Fluidleitung 6 mit geringerem Außendurchmesser anzuschließen, wie dies in Figuren 1 und 2 bei der jeweils links abgebildeten Fluidleitung 6 der Fall ist.

Hierzu wird im Befestigungsabschnitt 23 eine lediglich hinsichtlich des Durchmessers der Durchtrittsöffnung 24 modifizierte Befestigungseinrichtung 22 platziert. Der Durchmesser ist in Anpassung an den verringerten Durchmesser der anzuschließenden Fluidleitung 6 reduziert.

Außerdem wird in den Dichtungsaufnahmeabschnitt 17 ein Dichtungsring 16 eingesetzt, dessen Innendurchmesser ebenfalls in Anpassung an den geringeren Außendurchmesser der Fluidleitung 6 reduziert ist.

Zusätzlich wird in den Zentrierabschnitt 14 koaxial ein Adapterring 34 eingesetzt, der den ansonsten vorhandenen ringförmigen radialen Zwischenraum zwischen dem Innenumfang 32 des unverändert gebliebenen Zentrierabschnittes 14 und dem Außenumfang 28 des im Durchmesser verringerten Leitungsendabschnitt 27 überbrückt.

Der Adapterring 34 umschließt den Leitungsendabschnitt 27 koaxial und bildet ein ringförmiges Abstützelement, das die radiale Stützkraft zwischen dem Gehäuse 2 und dem Leitungsendabschnitt 27 überträgt, sodass der Leitungsendabschnitt 27 trotz des im Vergleich zum Zentrierabschnitt 14 verringerten Außendurchmessers allseits in radialer Richtung abgestützt ist.

Man kann ohne weiteres mehrere Adapterringe 34 zur Verfügung stellen, die im Außendurchmesser identisch sind und sich lediglich im Innendurchmesser voneinander unterscheiden und die man wahlweise alternativ im Zentrierabschnitt 14 platzieren kann, in Abhängigkeit vom Außendurchmesser der momentan anzuschließenden Fluidleitung 6.

Da normalerweise die Innendurchmesser von Dichtungsring 16 und Adapterring 34 in einer festen Beziehung zueinander stehen, wird es als vorteilhaft angesehen, wenn der Dichtungsring 16 und der Adapterring 34 zu einer Baueinheit vereinigt sind, wie dies bei beiden Ausführungsbeispielen der Fall ist. Diese Baueinheit sei im Folgenden als Dichtungs- und Adapter-Baueinheit 36 bezeichnet.

Auch bei einer solchen Bauform kann bei Bedarf eine voneinander abweichende Materialwahl für die beiden Ringe 16, 34 vorgesehen werden. Dies gilt selbst für eine einstückig miteinander verbundene Ausführungsform der beiden Ringe 16, 34, die sich beispielsweise durch ein Zwei-Komponenten-Spritzgußverfahren herstellen lässt. Beim Ausführungsbeispiel bestehen beide Ringe 16, 34 aus Material mit gummielastischen Eigenschaften, insbesondere Elastomermaterial, wobei zweckmäßigerweise das gleiche Material gewählt ist und die Dichtungs- und Adapter-Baueinheit 36 eine insgesamt einstückige Komponente darstellt.

Bei allen Ausführungsbeispielen ist der Dichtungsring 16 ein bezüglich der Befestigungseinrichtung 22 separates Bauteil, welches nicht an der Befestigungseinrichtung 22 fixiert ist. Der im Dichtungsaufnahmeabschnitt 17 sitzende Dichtungsring 16 wird von der Befestigungseinrichtung 22 lediglich axial beaufschlagt und dadurch an Ort und Stelle gehalten.

Bei einer nicht näher dargestellten Ausführungsform ist der Dichtungsring 16 an der Befestigungseinrichtung 22 fixiert und kann somit gemeinsam mit dieser in der Gehäuseausnehmung 3 platziert oder herausgenommen werden.

Liegt eine Dichtungs- und Adapter-Baueinheit 36 vor, ragt der Adapterring 34 zweckmäßigerweise nach Art eines Kragens vom diesbezüglich einen größeren Außendurchmesser aufweisenden Dichtungsring 16 weg. Die axiale Montagetiefe innerhalb der Gehäuseausnehmung 3 wird dadurch vorgegeben, dass die Dichtungs- und Adapter-Baueinheit 36 mit ihrem Dichtungsring 16 an der ersten Abstufung 15 zur Anlage gelangt. Die Länge des Adapterrings 34 ist zweckmäßigerweise etwas geringer als diejenige des Zentrierabschnittes 14, sodass zwischen der freien Stirnfläche des Adapterringes 34 und der gegenüberliegenden inneren Stirnfläche der Gehäuseausnehmung 3 zweckmäßigerweise ein wenigstens kleiner axialer Zwischenraum 39 verbleibt.

Der Adapterring 34 könnte derart formstabil ausgeführt sein, dass er auch ohne eingesteckte Fluidleitung 6 über zylindrische Innen- und Außenkonturen verfügt. Die Einsteckmontage in den Zentrierabschnitt 14 wird allerdings erleichtert, wenn der Außendurchmesser des Adapterringes 34 zumindest zu seiner freien Stirnseite hin bei nicht eingesteckter Fluidleitung 6 geringer ist als der Innendurchmesser des Zentrierabschnittes 14 und sich die letztlich gewünschte Gebrauchsgestalt erst beim Einführen der Fluidleitung 6 einstellt, indem diese den Adapterring 34 dehnt und bis zur Anlage am Innenumfang 32 des Zentrierabschnittes 14 aufweitet.

Zur Realisierung dieses Prinzips ist der Adapterring 34 bei den Ausführungsbeispielen so gestaltet, dass er bei nicht eingestecktem Leitungsendabschnitt 27 eine sich sowohl am Außenumfang als auch am Innenumfang zur freien Stirnseite hin konisch verjüngende Gestalt hat, wie dies in der Zeichnung strichpunktiert bei 34a angedeutet ist. Solange die anzuschließende Fluidleitung 6 noch nicht eingeführt ist, resultiert daraus zwischen dem Außenumfang des Adapterringes und dem Innenumfang 32 des Zwischenabschnittes 14 ein Ringspalt 37 mit keilförmigem, sich in Richtung zum Dichtungsring 16 verjüngendem Querschnitt. Die Konizität am Innenumfang des Adapterringes 34 ist so gewählt, dass sich ein engster Innendurchmesser ergibt, der etwa um die radiale Breite des Ringspaltes 37 geringer ist als der Außenumfang des Leitungsendabschnittes 27.

Wird nun beim Anschlussvorgang die Fluidleitung 6 in die Gehäuseausnehmung 3 eingeführt, beaufschlagt sie den Innenumfang des Adapterringes 34 und weitet letzteren bis zur Anlage am Innenumfang 32 des Zentrierabschnittes 14 auf. Damit ist die gewünschte Zentrier- und Abstützfunktion gewährleistet.

Die aus der Zeichnung hervorgehende bevorzugte Ausgestaltung der Befestigungseinrichtung 22 sieht eine in den Befestigungsabschnitt 23 eingesetzte Trägerhülse 38 vor, die, insbesondere an ihrem dem Dichtungsring 16 zugewandten Endbereich, mit einem koaxial ausgerichteten Haltering 42 bestückt ist. Der Haltering 42 ist zweckmäßigerweise ein federelastisches, vorzugsweise aus Metall bestehendes Bauteil, welches sich mit seinem radial außen liegenden Randbereich 43 an der Trägerhülse 38 abstützt und dessen radial innen liegender Randbereich als Klemmabschnitt 44 fungiert, der einen im Vergleich zum Außenquerschnitt der Fluidleitung 6 geringeren Klemmquerschnitt definiert. Der Klemmabschnitt 44 ist bezüglich der Trägerhülse 38 verschwenkbar, bei gleichzeitiger Veränderung des umgrenzten Klemmquerschnittes.

Zweckmäßigerweise ist der Haltering 42 zwischen der Trägerhülse 38 und einem dieser axial innen koaxial vorgelagerten Abstützring 45 gehalten. Der Abstützring 45 beaufschlagt gleichzeitig den Dichtungsring 16 in axialer Richtung, sodass dieser zwischen dem Abstützring 45 und der ersten Abstufung 15 axial unbeweglich eingespannt ist.

Beim Einstecken der Fluidleitung 6 wird der Haltering 42 im Bereich des Klemmabschnittes 44 elastisch aufgeweitet, sodass er mit seiner Rückstellkraft klemmend auf den Außenumfang der Fluidleitung 6 einwirkt und diese an einem Herausziehen gehindert wird.

Zum Lösen der Verbindung ist in der Trägerhülse 38 eine gemäß Doppelpfeil 46 relativ zur Trägerhülse 38 axial verstellbare Lösehülse 47 gelagert. Sie ragt mit einem Betätigungsabschnitt 48 im Bereich der Außenfläche 4 axial aus der Trägerhülse 38 heraus und besitzt am entgegengesetzten Ende einen dem Klemmabschnitt 44 axial gegenüberliegenden Beaufschlagungsabschnitt 52.

Wird auf den Betätigungsabschnitt 48 eine nach axial innen gerichtete Drückkraft ausgeübt, verlagert sich die Lösehülse 47 nach innen und drückt mit ihrem Beaufschlagungsabschnitt 52 auf den Klemmabschnitt 44, der in Folge dessen verschwenkt und vom Außenumfang der Fluidleitung 6 abgehoben wird. Letztere kann mithin aus der Befestigungseinrichtung 22 herausgezogen werden.

Der Klemmabschnitt 44 besitzt zweckmäßigerweise mehrere in Umfangsrichtung beabstandete Klauen.

Um die jeweilige Gehäuseausnehmung 3 für den Anschluss von Fluidleitungen 6 unterschiedlicher Durchmesser umrüsten zu können, ist es von Vorteil, wenn die Befestigungseinrichtung 22 lösbar am Gehäuse 2 fixiert ist. Zwei mögliche Realisierungsformen hierzu gehen aus den Figuren 1 und 2 hervor.

Bei beiden Ausführungsbeispielen erfolgt die Fixierung der Befestigungseinrichtung 22 durch eine lösbare Verbindung zwischen der Trägerhülse 38 und dem Gehäuse 2. Die Trägerhülse 38 ist jeweils lösbar in der Gehäuseausnehmung 3 gehalten.

Beim Ausführungsbeispiel der Figur 1 ist die Trägerhülse 38 ein Steckteil, das ohne Schraubvorgang von außen her axial in den Befestigungsabschnitt 23 einsteckbar und bei Bedarf auch wieder herausziehbar ist. Am Außenumfang ist jede Trägerhülse 38 mit einer Ringnut 53 versehen, die im eingesteckten Zustand der Trägerhülse 38 auf gleicher Höhe mit zwei in der Zeichnung vor und hinter der Zeichenebene liegenden Schlitzen liegt, die umfangsseitig in den Befestigungsabschnitt 23 einmünden. Diese Schlitze resultieren aus zwei das Gehäuse 2 durchsetzenden, zueinander parallelen Bohrungen, die den Befestigungsabschnitt 23 nach Art von Sekanten anschneiden.

Nachdem die Trägerhülse 38 in den Befestigungsabschnitt 23 eingesteckt ist, wird in das Gehäuse 2 eine U-förmige Halteklammer 54 eingesteckt, deren zwei Klammerschenkel 55 die Trägerhülse 38 an diametral entgegengesetzten Seiten flankieren und in die Gehäusebohrungen eintauchen wobei sie im Bereich der vorgenannten Schlitze von radial außen her in den Befestigungsabschnitt 23 hineinragen. Dabei tauchen die Klammerarme 55 gleichzeitig formschlüssig in die Ringnuten 53 ein und sorgen für eine axial unbewegliche Fixierung der Trägerhülse 38 im Innern des Befestigungsabschnittes 23.

Soll eine Gehäuseausnehmung 3 umgerüstet werden, muss lediglich die Halteklammer 54 herausgezogen werden, sodass die Trägerhülse 38 gelöst ist und entnommen werden kann. Dichtungsring 16 und Adapterring 34 können dann ebenfalls ausgetauscht bzw. entnommen oder eingesetzt werden.

Beim Ausführungsbeispiel der Figur 2 erfolgt die lösbare Fixierung der Trägerhülse 38 über eine Schraubverbindung 58. Der Befestigungsabschnitt 23 ist mit einem Innengewinde versehen, in das die mit einem komplementären Außengewinde versehene Trägerhülse 38 einschraubbar ist.

Beim Ausführungsbeispiel der Figur 2 wird die Montagetiefe der Trägerhülse 38 durch einen Ringbund 56 vorgegeben, der am äußeren axialen Ende der Trägerhülse 38 angeformt ist und auf die Außenfläche 4 aufläuft. Dieser Ringbund 56 kann übrigens mit einem Außenmehrkant versehen sein, um ein Schraubwerkzeug bequem ansetzen zu können.

Beim Ausführungsbeispiel der Figur 1 ist der Befestigungsabschnitt 23 intern abgestuft, sodass sich eine Anschlagschulter 57 ergibt, auf der sich die Trägerhülse 38 axial abstützen kann.

## Patentansprüche

1. Anschlussvorrichtung, geeignet für einen Anschluss von unterschiedlichen Fluidleitungen mit unterschiedlichem Außendurchmesser an ein Gehäuse (2), mit einem Gehäuse (2), in dem mindestens eine in Längsrichtung abgestufte, am inneren Ende in einen Fluidkanal (5) übergehende Gehäuseausnehmung (3) ausgebildet ist, wobei in der Gehäuseausnehmung (3) eine eine das Hindurchstecken einer anzuschließenden Fluidleitung (6) ermöglichende Durchtrittsöffnung (24) definierende Befestigungseinrichtung (22) fixiert ist, der ein eine auf die Außenkontur der anzuschließenden Fluidleitung (6) abgestimmte Innenkontur aufweisender, von der angeschlossenen Fluidleitung (6) durchsetzter und mit der Wandung der Gehäuseausnehmung (3) in Dichtkontakt stehender Dichtungsring (16) axial innen vorgelagert ist, und wobei sich axial innen an den den Dichtungsring (16) enthaltenden Ausnehmungsabschnitt (17) ein diesbezüglich einen verringerten Querschnitt aufweisender Zentrierabschnitt (14) der Gehäuseausnehmung (3) anschließt, in den die angeschlossene Fluidleitung (6) mit ihrem Leitungsendabschnitt (27) unter gleichzeitiger Querabstützung hineinragt, **dadurch gekennzeichnet, dass** die Anschlussvorrichtung einen unter Bildung einer Baueinheit (36) einstückig mit dem Dichtungsring (16) ausgebildeten Adapterring (34) aufweist, der zur Überbrückung eines in Abhängigkeit vom Außendurchmesser der anzuschließenden Fluidleitung (6) vorhandenen radialen Zwischenraumes zwischen dem Außenumfang (28) des Leitungsendabschnittes (27) und dem Innenumfang (32) des Zentrierabschnittes (14) in den Zentrierabschnitt (14) einsetzbar ist und im in den Zentrierabschnitt (14) eingesetzten Zustand eine allseitige radiale Abstützung des in ihn hineinragenden Leitungsendabschnittes (27) bezüglich des Innenumfanges (32) des Zentrierabschnittes (14) bewirkt.

2. Anschlussvorrichtung nach Anspruch 1, **dadurch gekennzeichnet, dass** der Dichtungsring (16) ein bezüglich der Befestigungseinrichtung (22) gesondertes, nicht an der Befestigungseinrichtung (22) fixiertes Bauteil ist.

3. Anschlussvorrichtung nach Anspruch 1 oder 2, **dadurch gekennzeichnet, dass** der Adapterring (34) kragenartig vom Dichtungsring (16) wegragt.

4. Anschlussvorrichtung nach einem der Ansprüche 1 bis 3, **dadurch gekennzeichnet, dass** der Adapterring (34) bei nicht eingestecktem Leitungsendabschnitt (27) eine sich sowohl am Außenumfang als auch am Innenumfang zu seinem dem Dichtungsring (16) entgegengesetzten freien Ende hin konisch verjüngende Gestalt hat, wobei zwischen dem Außenumfang des Adapterringes (34) und dem Innenumfang (32) des Zentrierabschnittes (14) ein Ringspalt (37) mit keilförmigem Querschnitt vorliegt, und wobei der engste Innendurchmesser des Adapterringes (34) kleiner ist als der Außendurchmesser der anzuschließenden Fluidleitung (6), derart, dass der Adapterring (34) von der einzusteckenden Fluidleitung (6) bis zur Anlage am Innenumfang (32) des Zentrierabschnittes (14) aufweitbar ist.

5. Anschlussvorrichtung nach einem der Ansprüche 1 bis 4, **dadurch gekennzeichnet, dass** der Dichtungsring (16) aus Material mit gummielastischen Eigenschaften besteht.

6. Anschlussvorrichtung nach einem der Ansprüche 1 bis 5, **dadurch gekennzeichnet, dass** der Adapterring (34) aus Material mit gummielastischen Eigenschaften besteht.

7. Anschlussvorrichtung nach einem der Ansprüche 1 bis 6, **gekennzeichnet durch** mehrere Gehäuseausnehmungen (3) mit untereinander identischer Gestaltung, deren Zentrierabschnitte (14) zur Fixierung von Fluidleitungen (6) unterschiedlicher Außendurchmesser teils mit und teils ohne Adapterring (34) ausgeführt sind.

8. Anschlussvorrichtung nach einem der Ansprüche 1 bis 7, **dadurch gekennzeichnet, dass** die Befestigungseinrichtung (22) eine in der Gehäuseausnehmung (3) fixierte Trägerhülse (38) aufweist, die mit einem koaxial angeordneten Haltering (42) bestückt ist, durch den die angeschlossene Fluidleitung (6) hindurchgreift, wobei er die Fluidleitung (6) am Außenumfang haltend beaufschlagt.

9. Anschlussvorrichtung nach Anspruch 8, **gekennzeichnet durch** eine in der Trägerhülse (38) axial verschiebbar geführte Lösehülse (47), die axial außen aus der Trägerhülse (38) hinausragt und gegen den Haltering (42) drückbar ist, um dessen Haltegriff bezüglich der eingesteckten Fluidleitung (6) zu lösen.

10. Anschlussvorrichtung nach einem der Ansprüche 1 bis 9, **dadurch gekennzeichnet, dass** die Befestigungseinrichtung (22) lösbar in der Gehäuseausnehmung (3) fixiert ist.

11. Anschlussvorrichtung nach einem der Ansprüche 8 bis 10, **dadurch gekennzeichnet, dass** die Trägerhülse (38) lösbar in der Gehäuseausnehmung (3) gehalten ist.

12. Anschlussvorrichtung nach Anspruch 11, **dadurch gekennzeichnet, dass** die Trägerhülse (38) ohne Schraubverbindung in die Gehäuseausnehmung (3) eingesteckt ist und dort von einer an diametral gegenüberliegenden Stellen formschlüssig in sie eingreifenden, sich am Gehäuse (2) abstützenden Halteklammer (54) gehalten ist.

13. Anschlussvorrichtung nach Anspruch 11, **dadurch gekennzeichnet, dass** die Trägerhülse (38) ein Außengewinde aufweist und in die Gehäuseausnehmung (3) eingeschraubt ist.

14. Anschlussvorrichtung nach einem der Ansprüche 1 bis 13, **dadurch gekennzeichnet, dass** das Gehäuse (2) integraler Bestandteil eines fluidtechnischen Gerätes (7) ist, beispielsweise eines Ventils oder eines durch Fluidkraft betätigbaren Antriebes.

## Claims

1. Connection device, suitable for connection of different fluid lines with varying outside diameters to a housing (2), with a housing (2) in which is formed at least one housing recess (3), stepped in the longitudinal direction and merging at the inner end into a fluid passage (5), wherein there is fixed in the housing recess (3) a mounting device (22) defining a through opening (24) allowing the insertion of a fluid line (6) to be connected, axially in front of which is mounted a seal ring (16) with an inside contour matched to the outside contour of the fluid line (6) to be connected, with the fluid line (6) passing through it, and in sealing contact with the walls of the housing recess (3), and wherein the recess section (17) containing the seal ring (16) has adjoining it on the axial inside a centring section (14) of the housing recess (3), with a reduced cross-section compared to the former section, into which the connected fluid line (6) extends with its line end section (27) with simultaneous lateral support, **characterised in that** the connection device has an adapter ring (34) formed in one piece with the seal ring (16) to create a unit (36) which may be inserted into the centring section (14) to bridge a radial gap, depending on the outside diameter of the fluid line (6) to be connected, between the outer periphery (28) of the line end section (27) and the inner periphery (32) of the centring section (14) and which, when inserted in the centring section (14), effects radial support on all sides of the line end section (27) extending into it, relative to the inner periphery (32) of the centring section (14).

2. Connection device according to claim 1, **characterised in that** the seal ring (16) is a separate component from the mounting device (22), not fixed to the mounting device (22).

3. Connection device according to claim 1 or 2, **characterised in that** the adapter ring (34) extends away from the seal ring (16) in the manner of a collar.

4. Connection device according to any of claims 1 to 3, **characterised in that** the adapter ring (34), with the line end section (27) not inserted, has a shape tapering conically towards its free end opposite the seal ring (16), both on its outer periphery and on its inner periphery, wherein between the outer periphery of the adapter ring (34) and the inner periphery (32) of the centring section (14) there is an annular gap (37) with a wedge-shaped cross-section, and wherein the narrowest inside diameter of the adapter ring (34) is less than the outside diameter of the fluid line (6) to be connected, in such a way that the adapter ring (34) may be expanded by the fluid line (6) to be inserted, up to the contact with the inner periphery (32) of the centring section (14).

5. Connection device according to any of claims 1 to 4, **characterised in that** the seal ring (16) is made of material with rubber-elastic properties.

6. Connection device according to any of claims 1 to 5, **characterised in that** the adapter ring (34) is made of material with rubber-elastic properties.

7. Connection device according to any of claims 1 to 6, **characterised by** several housing recesses (3) of identical design, with centring sections (14) of varying outside diameter for the fixing of fluid lines (6), some with and some without an adapter ring (34).

8. Connection device according to any of claims 1 to 7, **characterised in that** the mounting device (22) has a support sleeve (38) fixed in the housing recess (3) and equipped with a coaxial retaining ring (42) through which the connected fluid line (6) reaches, wherein it presses against the outer periphery of the fluid line (6) so as to hold it in place.

9. Connection device according to claim 8, **characterised by** a release sleeve (47) guided so as to be capable of axial movement in the support sleeve (38), and extending axially outwards from the support sleeve (38), and able to be pressed against the retaining ring (42) so as to release its holding grip on the inserted fluid line (6).

10. Connection device according to any of claims 1 to 9, **characterised in that** the mounting device (22) is fixed releasably in the housing recess (3).

11. Connection device according to any of claims 8 to 10, **characterised in that** the support sleeve (38) is held releasably in the housing recess (3).

12. Connection device according to claim 11, **characterised in that** the support sleeve (38) is inserted in the housing recess (3) without a screw connection, and is held there by a retaining clamp (54) resting on the housing (2) and engaging positively with the support sleeve at diametrically opposite points.

13. Connection device according to claim 11, **characterised in that** the support sleeve (38) has an external thread which is screwed into the housing recess (3).

14. Connection device according to any of claims 1 to 13, **characterised in that** the housing (2) is an integral part of a fluid technical device (7), for example a valve or a drive actuable by fluid power.

## Revendications

1. Dispositif de connexion conçu pour à une connexion de conduits de fluide différents présentant un diamètre extérieur différent à un boîtier (2), comportant un boîtier (2), dans lequel est réalisé au moins un évidement de boîtier (3) passant sur l'extrémité intérieure dans un canal de fluide (5), et étagé dans le sens longitudinal, un dispositif de fixation (22) définissant une ouverture de passage (24) permettant l'engagement d'un conduit de fluide à connecter (6) étant fixé dans l'évidement de boîtier (3), dispositif de fixation en amont duquel est monté axialement à l'intérieur un anneau d'étanchéité (16) présentant un contour intérieur adapté au contour extérieur du conduit de fluide à connecter (6), traversé par le conduit de fluide connecté (6) et en contact étanche avec la paroi de l'évidement de boîtier (3), et une section de centrage (14) de l'évidement de boîtier (3), présentant à cet effet une section réduite, se connectant axialement à l'intérieur à la section d'évidement (17) contenant l'anneau d'étanchéité (16), section de centrage dans laquelle le conduit de fluide connecté (6) pénètre par sa section d'extrémité de conduit (27) par appui transversal simultané, **caractérisé en ce que** le dispositif de connexion présente un anneau adaptateur (34) réalisé d'un seul tenant avec l'anneau d'étanchéité (16) en formant une unité structurelle (36), anneau adaptateur qui peut être inséré dans la section de centrage (14) pour recouvrir un espace intermédiaire radial présent en fonction du diamètre extérieur du conduit de fluide (6) à connecter entre la périphérie extérieure (28) de la section d'extrémité de conduit (27) et la périphérie intérieure (32) de la section de centrage (14) et opère, dans l'état inséré dans la section de centrage (14), un appui radial de tous les côtés de la section d'extrémité de conduit (27) pénétrant dedans par rapport à la périphérie intérieure (32) de la section de centrage (14).

2. Dispositif de connexion selon la revendication 1, **caractérisé en ce que** l'anneau d'étanchéité (16) est un composant non fixé sur le dispositif de fixation (22), et distinct du dispositif de fixation (22).

3. Dispositif de connexion selon la revendication 1 ou 2, **caractérisé en ce que** l'anneau adaptateur (34) dépasse comme un collet de l'anneau étanche (16).

4. Dispositif de connexion selon l'une quelconque des revendications 1 à 3, **caractérisé en ce que** l'anneau adaptateur (34) présente, en cas de section d'extrémité de conduit (27) non enfichée, une forme se rétrécissant de manière conique non seulement sur la périphérie extérieure mais aussi sur la périphérie intérieure vers son extrémité libre opposée à l'anneau d'étanchéité (16), en cas de section d'extrémité de conduit (27) non enfichée, une fente annulaire (37) à section cunéiforme étant présente entre la périphérie extérieure de l'anneau adaptateur (34) et la périphérie intérieure (32) de la section de centrage (14), et le diamètre intérieur le plus étroit de l'anneau adaptateur (34) étant inférieur au diamètre extérieur du conduit de fluide (6) à connecter de telle manière que l'anneau adaptateur (34) puisse être élargi par le conduit de fluide (6) à enficher jusqu'à reposer contre la périphérie intérieure (32) de la section de centrage (14).

5. Dispositif de connexion selon l'une quelconque des revendications 1 à 4, **caractérisé en ce que** l'anneau l'étanchéité (16) se compose de matériau présentant des propriétés du caoutchouc élastique.

6. Dispositif de connexion selon l'une quelconque des revendications 1 à 5, **caractérisé en ce que** l'anneau adaptateur (34) se compose de matériau présentant des propriétés du caoutchouc élastique.

7. Dispositif de connexion selon l'une quelconque des revendications 1 à 6, **caractérisé par** plusieurs évidements de boîtier (3) avec une forme identique entre eux, dont les sections de centrage (14) sont réalisées pour la fixation de conduits de fluide (6) de diamètre extérieur différent en partie avec et en partie sans anneau adaptateur (34).

8. Dispositif de connexion selon l'une quelconque des revendications 1 à 7, **caractérisé en ce que** le dispositif de fixation (22) présente une douille de support (38) fixée dans l'évidement de boîtier (3) et équipée d'un anneau de retenue (42) disposé de manière coaxiale, traversé par le conduit de fluide (6) connecté le conduit de fluide (6) au niveau de la périphérie extérieure et plaquant fermement.

9. Dispositif de connexion selon la revendication 8, **caractérisé par** une douille de détachement (47) qui est guidée de manière mobile axialement dans la douille de support (38), qui dépasse axialement à l'extérieur de la douille de support (38) et qui peut être pressée contre l'anneau de retenue (42) afin de détacher sa poignée de maintien par rapport au conduit de fluide enfiché (6).

10. Dispositif de connexion selon l'une quelconque des revendications 1 à 9, **caractérisé en ce que** le dispositif de fixation (22) est fixé de manière détachable dans l'évidement de boîtier (3).

11. Dispositif de connexion selon l'une quelconque des revendications 8 à 10, **caractérisé en ce que** la douille de support (38) est maintenue de manière détachable dans l'évidement de boîtier (3).

12. Dispositif de connexion selon la revendication 11, **caractérisé en ce que** la douille de support (38) est enfichée sans vissage dans l'évidement de boîtier (3) et y est maintenue par un étrier de retenue (54) s'appuyant contre le boîtier (2) et s'engageant dedans par complémentarité de formes à des endroits diamétralement opposés.

13. Dispositif de connexion selon la revendication 11, **caractérisé en ce que** la douille de support (38) présente un filetage extérieur et est vissée dans l'évidement de boîtier (3).

14. Dispositif de connexion selon l'une quelconque des revendications 1 à 13, **caractérisé en ce que** le boîtier (2) fait partie intégrante d'un appareil technique de fluide (7), par exemple d'une soupape ou d'un entraînement pouvant être actionné par force de fluide.
